# EUROPÄISCHE PATENTSCHRIFT

(11) **EP 3 789 469 B1**
(45) Veröffentlichungstag und Bekanntmachung des Hinweises auf die Patenterteilung: **13.09.2023**
(21) Anmeldenummer: 20175793.7
(22) Anmeldetag: 20.05.2020
(51) Int. Cl.: C09K 17/02, E02D 3/054, E02D 3/08, E02D 5/44

(54) **VERFAHREN ZUR HERSTELLUNG EINES GRUNDBAUELEMENTES**
METHOD FOR PRODUCING A BASE MODULE
PROCÉDÉ DE FABRICATION D'UN COMPOSANT DE BASE

(43) Veröffentlichungstag der Anmeldung: 10.03.2021
(73) Patentinhaber: Keller Holding GmbH, 63067 Offenbach/Main (DE)
(72) Erfinder: BUBENICEK, Michal, 109 00 Prag 10 (CZ)
(74) Vertreter: Neumann Müller Oberwalleney Patentanwälte PartG mbB

(56) Entgegenhaltungen:
- DE-A1- 3 033 715
- DE-A1- 3 324 509
- DE-A1-102006 007 144
- DE-B3-102018 123 794

## Beschreibung

Die vorliegende Erfindung betrifft ein Verfahren zur Herstellung eines Grundbauelements.

Fundamente von Bauwerken bestehen aus Bauelementen für den Grundbau, wie Platten, Trägern, Steinen oder Tiefgründungselementen. Die Tiefgründungselemente sind dabei häufig pfahlförmig ausgestaltet und nehmen in diesem Fall die Last der Bauwerke an dem vertikal oberen Ende des Tiefengründungselementes, dem Säulenkopf, auf und übertragen diese in das Erdreich, das auch als Baugrund bezeichnet werden kann. Dies erfolgt einerseits durch den Spitzendruck, der durch die Auflage des vertikal unteren Endes des Tiefengründungselementes, dem Säulenfuß, im Erdboden resultiert. Andererseits wird die Last aus dem Bauwerk über die Mantelreibung zwischen dem Erdreich und der Mantelfläche des Tiefengründungselementes aufgenommen.

Das Verhältnis der beiden Widerstandsanteile Spitzendruck und Mantelreibung hängt dabei maßgeblich von der Beschaffenheit des Erdreiches ab. Um die Tragfähigkeit von Tiefengründungselementen exakt bestimmen zu können, ist es notwendig, dass der Spitzendruck und die Mantelreibung voneinander getrennt ermittelt werden.

Aus Witt, Karl-Josef, Grundbau-Taschenbuch, Berlin: Wilhelm Ernst & Sohn Verlag, 2018, Teil 3, Gründungen und geotechnische Bauwerke, Kapitel 2.5.3 Pfahlfuß- und Mantelverpressung, ist ein Verfahren zur Erhöhung der Pfahlwiderstände von Grundbauelementen bekannt, bei dem mittels am Pfahlfuß angeordneten dehnbaren Druckblasen oder Drucktöpfen die Pfahlsohle vorbelastet wird, um Setzverluste während der Lebensdauer des Grundbauelements zu verringern.

Aus Tomlinson, Michael, Pile Design and Construction Practice, London: Taylor & Francis, 2008, Kapitel 3.3.9, ist ein Verfahren zur Erhöhung der Tragfähigkeit von Grundbauelementen bekannt, bei dem ein Kompressionskorb in der Pfahlsohle angeordnet wird, über den Mörtel nach der Herstellung des Pfahles in das an die Pfahlsohle angrenzende Erdreich eingepresst werden kann. Der Kompressionskorb verbleibt nachfolgend im Boden.

Aus der EP 3 628 782 A1 ist ein Verfahren zur Herstellung eines spitzendruckfreien Bauelements bekannt, bei dem ein lösliches Material in ein Erdreich eingebracht wird und nachfolgend ein Bauelement in das Erdreich auf dem löslichen Material eingebracht wird. Durch die Bodenfeuchte löst sich das lösliche Material auf, sodass unterhalb des Bauelements eine Kammer gebildet wird. An dem so hergestellten Bauelement kann die Mantelreibung ohne Einfluss des Spitzendrucks gemessen werden.

Hiervon ausgehend liegt der Erfindung die Aufgabe zugrunde, ein Verfahren bereitzustellen, mit dem ein Grundbauelement mit einer erhöhten Tragfähigkeit einfach und kosteneffizient hergestellt werden kann.

Zur Lösung der Aufgabe wird ein Verfahren zur Herstellung eines Grundbauelementes vorgeschlagen, umfassend die Schritte: Einbringen eines Füllmaterials in ein Erdreich, wobei das Füllmaterial aus einem festen Zustand, in dem es in das Erdreich eingebracht wird, in einen gelösten Zustand überführbar ist; Einbringen eines Bauelementes in das Erdreich auf das Füllmaterial, wenn dies im festen Zustand ist, wobei das Füllmaterial unterhalb des Bauelements eine Kammer ausfüllt; Herstellen einer Zuführung zu der unterhalb des Bauelements liegenden Kammer; und Einbringen eines Verpressmittels durch die Zuführung in die unterhalb des Bauelements liegende Kammer, nachdem das Füllmaterial zumindest teilweise, insbesondere zumindest größtenteils, in gelöstem Zustand ist.

Das erfindungsgemäße Verfahren weist den Vorteil auf, dass die unterhalb des Bauelements liegende Kammer nach dem Lösen beziehungsweise Verflüssigen des Füllmaterials beim Einbringen des Verpressmittels als Druckwiderlager wirkt, sodass das Grundbauelement in vertikaler Richtung dauerhaft vorgespannt wird, und die aus der Mantelreibung resultierende Tragfähigkeit erhöht wird. Gleichzeitig wird durch das Einbringen des Verpressmittels im Bereich des Fußes des Grundbauelementes die aus dem Spitzendruck resultierende Tragfähigkeit erhöht. Darüber hinaus werden Setzerscheinungen des Grundbauelementes reduziert. Das erfindungsgemäß hergestellte Bauelement hat somit insgesamt eine hohe Tragfähigkeit über dessen Lebensdauer. Das erfindungsgemäße Verfahren weist ferner den Vorteil auf, dass die Mantelreibung des Grundbauelementes vor dem Einbringen des Verpressmittels ohne den Einfluss des Spitzendrucks des Grundbauelementes bestimmt werden kann, wobei das nach dem erfindungsgemäßen Verfahren hergestellte Grundbauelement nachfolgend als voll tragfähiges Gründungselement verwendet werden kann.

Das in festem Zustand in den Baugrund eingebrachte Füllmaterial wird nach dem Einbringen des Bauelements in den gelösten Zustand überführt, was vorzugsweise automatisch mit der Zeit erfolgt. Als gelöster Zustand soll im Rahmen der vorliegenden Offenbarung jeder Zustand mit umfasst sein, in dem das Füllmaterial nicht mehr völlig in fester Form vorliegt. Dies kann beispielsweise durch Auflösen des Füllmaterials als Reaktion mit einem anderen Stoff und/oder Verflüssigen des Füllmaterials erfolgen. Insofern können gelöster Zustand und verflüssigter Zustand hier synonym verwendet werden. Je nach Füllmaterial kann das Verflüssigen beispielsweise durch das im Erdreich vorhandene Wasser und/oder Wärme erfolgen. In einem trockenen Bodenbestand kann das Füllmaterial künstlich vor oder nach Herstellung des Bauelements oder vor dem Verpressen gewässert werden. Das gelöste beziehungsweise verflüssigte Füllmaterial kann dann entweder in das angrenzende Erdreich versickern oder es wird beim Einpressen des Verpressmittels in das angrenzende Erdreich verdrängt. In beiden Fällen definiert die unter dem Bauelement liegende Kammer nachfolgend einen Raum, der das Verpressmittel aufnehmen kann. Dabei kann zwischen dem Einbringen des Bauelementes und dem Einpressen des Verpressmittels eine Verflüssigungszeit eingehalten werden, sodass das Füllmaterial zumindest teilweise, vorzugsweise größtenteils, in den flüssigen Zustand überführt wird.

Als flüssiger Zustand des Füllmaterials soll im Sinne der Erfindung auch das in einem Lösungsmittel wie Wasser gelöst Füllmaterial verstanden werden. Als Füllmaterial kann beispielweise ein wasserlösliches Material verwendet werden. Als Füllmaterial kann ein Material mit einer Löslichkeit in Wasser von zumindest 33g/l Wasser, insbesondere von zumindest 100 g/l Wasser, verwendet werden. Das Füllmaterial kann somit ein Material aus der Gruppe der Salze sein, das durch die Bodenfeuchte des angrenzenden Erdreichs aufgelöst wird. Das Füllmaterial kann darüber hinaus aus der Gruppe der Säuren, insbesondere Kaliumchlorid oder Kaliumsulfat, gewählt werden. Auch ist es denkbar, dass das Füllmaterial gefrorenes Wasser, beispielsweise in Form von Eiswürfeln, ist, das von dem festen Aggregatzustand in den flüssigen Aggregatszustand überführt wird.

Als fester Zustand im Sinne der vorliegenden Erfindung soll jeder feste Aggregatszustand verstanden werden. Das Füllmaterial kann dabei beispielsweise als rolliges Material mit feiner oder grober Körnung, als Pulver, in monolithischer Form oder Kombinationen hieraus vorliegen.

In einer Ausgestaltung des Verfahrens kann das Einbringen des Füllmaterials in das Erdreich und/oder das Einbringen des Bauelementes auf dem Füllmaterial durch ein Tiefen- oder Aufsatzrüttelverfahren, durch ein Vortreibrohrverfahren oder durch ein Bohrverfahren erfolgen. Zum Einbringen des Füllmaterials in das Erdreich kann ein Gründungsloch in das Erdreich eingearbeitet werden und das Füllmaterial kann von einem Boden des Gründungsloches bis zu einer Sollfüllhöhe eingefüllt werden, die mindestens das 0,1-fache des Durchmessers und/oder maximal das 1,0-fache des Durchmessers des Bauelements entspricht. Das Füllmaterial kann unterhalb einer gewünschten Endtiefe des herzustellenden Bauelementes in den Boden errichtet beziehungsweise eingebracht werden. Nach dem Einbringen des Füllmaterials wird das Bauelement hierauf eingebracht, sodass das Bauelement nach dem Einbringen temporär auf dem Füllmaterial nach unten abgestützt ist.

Als Bauelement kann prinzipiell jedes Element verwendet werden, das zur Bauwerkgründung oder Bodenstabilisierung beziehungsweise -verbesserung verwendbar ist, beispielsweise in Form einer Betonstopfsäule, Rüttelstopfsäule oder eines Verdrängungspfahls. Beim Rüttelstopfverfahren wird ein Zugabematerials, beispielsweise Sand und/oder Kies, mittels eines Tiefenrüttlers in den Boden eingerüttelt und verdichtet. Ein Verdrängungspfahl kann beispielsweise als Fertigpfahl in den Baugrund eingebracht oder in situ im Boden hergestellt werden. Dabei kann ein flüssiger, abbindender Baustoff, wie Beton oder Mörtel, auf das Füllmaterial in den Baugrund eingebracht werden, das nach dem Abbinden einen Ortbetonfall bildet. Fertigteilpfähle können beispielsweise aus Stahlbeton, Stahl oder Guss hergestellt sein und werden in das Erdreich eingerammt oder eingedreht.

Als Verpressmittel kann beispielsweise Beton, Mörtel, Harz, Polyurethan, andere übliche Injektionsmittel, oder eine Kombination mehrerer Mittel verwendet werden. Je nach Füllmittel kann das Einbringen durch Verpressen, das heißt unter Aufbringen eines Drucks, oder durch druckloses Einfüllen in die Kammer erfolgen. Verpressen wird vorzugsweise bei Füllmittel verwendet, das im Wesentlichen ein konstantes Volumen aufweisen, wie Beton oder Mörtel. Ein Füllmittel, das beim Aushärten expandiert und auf diese Weise einen Druck in der Kammer und das darüber liegende Bauelement erzeugt, kann drucklos in die Kammer eingefüllt werden. Das Einbringen des Verpressmittels kann je nach Bodenbeschaffenheit in einem oder mehreren Schritten erfolgen. Insbesondere in nicht bindigen Böden mit größerer Porosität ist es günstig, das Verpressen in zumindest zwei Teilschritten vorzugnehmen, wobei zuerst ein erstes Verpressmittel mit einer ersten Viskosität und anschließend ein zweites Verpressmittel mit einer geringeren zweiten Viskosität in die unterhalb des Bauelements liegende Kammer eingepresst wird. Das erste Verpressmittel kann aufgrund der hören Viskosität die Poren des an die Kammer angrenzenden Erdreichs verfüllen und so zu einer Abdichtung führen. Durch die Abdichtung kann das nachfolgend niedrigviskose Verpressmittel nicht mehr beziehungsweise nur in geringem Umfang in das an die Kammer angrenzende Erdreich eindringen, sodass die Kammer effizient verfüllt wird. Demgegenüber würde die direkte Verwendung eines niedrigviskosen Verpressmittels dazu führen, dass ein beträchtlicher Teil des Verpressmittels in das die Kammer umliegende Erdreich eindringen würde, was zu einem erhöhten Einsatz von Verpressmittel führen würde und somit die Kosten des Verfahrens erhöhen würde.

Als erstes Verpressmittel kann beispielsweise ein Mörtel mit einer im Verarbeitungszustand hohen Steifheit oder Viskosität, was auch mit pastös bezeichnet werden kann, verwendet werden. Die Steifheit des ersten Verpressmittels kann insbesondere gleich steif oder steifer als Frischbeton der Konsistenzklassen C2 (Verdichtungsmaßklasse) und/oder F2 (Ausbreitmaßklassen) nach DIN 1045 sein, das heißt plastisch bis steif.

Als zweites Verspressmittel kann ein Mörtel mit geringerer Viskosität verwendet werden.

Die Zuführung kann in dem Bauelement vorgesehen werden. Dabei kann die Zuführung als Kanal hergestellt werden, der sich durch das Bauelement erstreckt. Das Herstellen der Zuführung kann dabei durch Bohren durch das bereits fertige beziehungsweise tragfähige Bauelement erfolgen, beispielsweise in Form einer Schneckenbohrung oder Sprenglochbohrung. Das zuvor genannte Vorgehen bei der Herstellung der Zuführung wird insbesondere bei Stopfsäulen oder Fertigpfählen verwendet. Alternativ oder in Kombination kann das Herstellen der Zuführung durch Einbringen eines Rohrs oder eines an einem Stab oder einer Armierung befestigten Schlauches in den Baustoff erfolgen, insbesondere durch Rammen, Pressen, Schrauben in den Baustoff in einem abgebundenen Zustand oder durch Einziehen in einem noch flüssigen beziehungsweise noch nicht abgebundenem Zustand.

Die Zuführung kann alternativ oder in Kombination am Bauelement vorgesehen werden. Das Herstellen der Zuführung kann dabei durch außen liegende Kanäle in einer Bewehrung erfolgen. Alternativ ist es auch denkbar, dass sich die Herstellung der Zuführung durch einen Kanal, der sich durch das Erdreich erstreckt, erfolgt. Bei dieser Ausgestaltung des Verfahrens bleibt das Grundbauelement von der Herstellung der Zuführung unberührt.

In einer Ausgestaltung des Verfahrens kann ein Verdichten des Füllmaterials, insbesondere durch Ausstopfen oder Einrütteln, nach dem Einbringen des Füllmaterials in das Erdreich, insbesondere vor oder während des Einbringens des Bauelementes, vorgesehen sein. Das Verdichten kann insbesondere derart erfolgen, dass die Festigkeit und/oder die Steifigkeit des Füllmaterials zumindest dem Produkt aus der Höhe des Bauelementes und dem spezifischen Gewicht des Bauelementes unmittelbar nach dem Einbringen des Bauelementes entspricht. Das Füllmaterial wird somit unter dem Druck des Bauelementes direkt nach dem Einbringen des Bauelementes nicht nachgeben, sodass eine exakte vertikale Positionierung des Bauelementes innerhalb des Bodens gewährleistet ist und Setzerscheinung während oder nach dem Einbringen des Bauelements in das Erdreich reduziert werden.

Das Füllmaterial kann derart verdichtet werden, dass eine Breite des Füllmaterials gleich oder größer ist als eine Breite des darauf zu erstellenden Bauelementes. Es wird somit sichergestellt, dass der Fuß des Bauelementes direkt nach dem Einbringen des Bauelementes vollständig auf dem Füllmaterial aufliegt. Nach dem Auflösen des Füllmaterials wirkt somit bei Auflast kein Spitzendruck mehr auf den Fuß des Bauelementes ein. Es wird zudem verhindert, dass das Bauelement seinerseits einen ringförmigen Fuß ausbildet, der gegenüber der restlichen Breite des Bauelementes aufgeweitet ist und somit eine Auflagefläche bildet, auf den ein Spitzendruck einwirken kann.

In einer weiteren Ausgestaltung des Verfahrens kann das Beimengen eines Verflüssigungsbeschleunigers zu dem Füllmaterial vorgesehen sein. Das Beimengen kann vor oder nach dem Einbringen des Füllmaterials in das Erdreich oder vor Verpressen erfolgen.

Als Verflüssigungsbeschleuniger können Stoffe, die als Lösemittel für das Füllmaterial wirken, verwendet werden. Beispielsweise kann dem Füllmaterial Wasser beigemengt werden, wenn als Füllmaterial ein wasserlösliches Material verwendet wird. Das Beimengen von Wasser kann insbesondere derart erfolgen, dass Hohlräume des Füllmaterials mit Wasser ausgefüllt werden. Das Verfahren kann somit auch in Bereichen mit sehr geringer Bodenfeuchte, insbesondere in Bereichen mit sehr niedrigem Grundwasserspiegel, angewendet und das Auflösen des Füllmaterials trotz der geringen Bodenfeuchte in einem ausreichend kleinen Zeitraum sichergestellt werden. Auch bei Einsatz von gefrorenem Wasser als Füllmaterial kann Wasser als Verflüssigungsbeschleuniger verwendet werden.

In einer weiteren Ausgestaltung des Verfahrens kann die unter dem Bauelement liegende Kammer nach dem zumindest teilweise Verflüssigen des Füllmaterials mit einem Spülmedium, insbesondere Wasser, gespült werden. Hierdurch kann das in der Kammer verbliebene Füllmaterial aus der Kammer gespült werden.

In einer weiteren Ausgestaltung des Verfahrens kann zusätzlich zum Füllmaterial ein Einlagematerial in das Erdreich eingebracht werden, welches die unter dem Bauelement liegende Kammer gemeinsam mit dem Füllmaterial ausfüllt. Als Einlagematerial kann dabei insbesondere ein Lockersediment, wie Kies und Sand, verwendet werden. Durch das Einlagematerial kann ein Lösemittel oder Verflüssigungsbeschleuniger das Füllmaterial besser benetzen, sodass die Dauer, bis sich das wird Material verflüssigt hat, reduziert werden kann. Als Einlagematerial kann auch ein künstlich hergestelltes rolliges Material verwendet werden.

In einer Ausgestaltung des Verfahrens kann das Einbringen des Einlagematerials auf das Füllmaterial nach dem Einbringen des Füllmaterials in das Erdreich und vor dem Einbringen des Bauelementes erfolgen. Hierbei kommt insbesondere in Betracht, dass das Einlagematerial als Deckschicht auf einer Schicht des Füllmaterials aufgebracht wird. Alternativ oder in Kombination ist es auch denkbar, dass das Einlagematerial als Zwischenschicht zwischen zwei Schichten des Füllmaterials eingebracht wird. Es kann bei dem Verfahren vorgesehen sein, dass ein Verdichten des Einlagematerials vor dem Einbringen des Bauelementes, insbesondere durch Ausstopfen oder Einrütteln erfolgt. Hierbei ist es insbesondere denkbar, dass einzelne Schichten des Einlagematerials verdichtet werden. Durch das Verdichten des Einlagematerials können Setzerscheinung während oder nach dem Einbringen des Bauelements in das Erdreich reduziert werden.

In einer alternativen Ausgestaltung des Verfahrens kann das Einbringen des Einlagematerials als Gemisch mit dem Füllmaterial erfolgen. In diesem Fall ist es denkbar, dass das Gemisch aus Füllmaterial und Einlagematerial gemeinsam verdichtet wird, um Setzerscheinungen während oder nach dem Einbringen des Bauelements in das Erdreich zu reduzieren.

In einer weiteren möglichen Ausführungsform des Verfahrens kann nach dem Einbringen des Bauelementes eine Ruhezeit eingehalten werden, bevor auf das Bauelement eine signifikante äußere Belastung aufgebracht wird. Als signifikante äußere Belastung soll dabei verstanden werden, dass das Bauelement mit mehr als 10% der Tragfähigkeit des Bauelementes belastet wird. Während der Ruhezeit löst sich das verflüssigbare Material zumindest teilweise auf, sodass unter dem Bauelement ein flüssigkeitsgefüllter Raum beziehungsweise Hohlraum entsteht.

Die Verflüssigungszeit kann größer sein als die Ruhezeit. Als Verflüssigungszeit kann zumindest 4 Tage, insbesondere zumindest 10 Tage, insbesondere zumindest 20 Tage, über die Zusammensetzung von Füllmaterial, Einlagematerial und/oder Verflüssigungsbeschleuniger und/oder dem Feuchtegehalt des Erdreiches eingestellt werden. Die Ruhezeit kann durch die Wahl eines entsprechenden Bauelementes und/oder eines als Bauelement verwendeten Baustoffs eingestellt werden.

In einer möglichen Ausführungsform des Verfahrens kann das Verpressmittel oder ein alternatives Verpressmittel im Bereich der Mantelfläche des Bauelementes in das angrenzende Erdreich verpresst werden. Hierzu können in dem Bauelement Auslässe in der Mantelfläche vorgesehen sein, durch die das Verpressmittel in das angrenzende Erdreich verpresst wird. Das zuvor beschriebene Vorgehen wird insbesondere bei Fertigteilepfählen angewendet.

In einer weiteren Ausführungsform des Verfahrens kann nach dem Einbringen des Bauelementes und vor dem Einpressen des Verpressmittels die Mantelreibung des Bauelementes bestimmt werden. Dies kann durch die gängigen Verfahren zur Bestimmung der Mantelreibung erfolgen, insbesondere durch das Aufbringen einer Kraft am Kopf des Bauelementes über eine hydraulische Presse in Richtung einer Längsachse des Bauelementes.

In einer Weiterbildung des Verfahrens kann neben dem erfindungsgemäß hergestellten Bauelement ein weiteres Bauelement in das Erdreich eingebracht werden, wobei das weitere Bauelement gleiche Abmessungen wie das Bauelement aufweist und derart in das Erdreich eingebracht wird, dass von dem Erdreich ein Spitzendruck auf das weitere Bauelement wirkt. Nach dem Einbringen des weiteren Bauelements kann der Gesamtwiderstand des weiteren Bauelements bestimmt werden. Aus dem Gesamtwiderstand des weiteren Bauelementes und der Mantelreibung des Bauelementes kann der Spitzendruckwiderstand des weiteren Bauelementes ermittelt werden. Der Abstand des weiteren Bauelements von dem Bauelement kann dabei maximal so groß gewählt werden, dass das weitere Bauelement in einen Teil des Erdreichs eingebracht wird, dessen Charakteristik mit dem Teil des Erdreiches, in den das Bauelement eingebracht wurde, vergleichbar ist.

In den folgenden Figurendarstellungen werden bevorzugte Ausführungsformen des erfindungsgemäßen Verfahrens beschrieben. Dabei zeigt
- Figur 1: einen ersten Teil eines erfindungsgemäßen Verfahrens zur Herstellung eines Grundbauelements in einer ersten Ausführungsform,
A) nach dem Abteufen einer Einfüllvorrichtung,
B) nach dem Einbringen von Füllmaterial in den Boden,
C) nach dem Verdichten des Füllmaterials,
D) während des Einbringens des Bauelementes auf dem Füllmaterial,
E) nach dem vollständigen Einbringen des Bauelementes in den Boden auf das Füllmaterial,
- Figur 2: einen zweiten Teil des erfindungsgemäßen Verfahrens zur Herstellung eines Grundbauelements in der ersten Ausführungsform,
A) während der Herstellung einer Zuführung durch das Bauelement in die darunter liegende Kammer;
B) nach der Herstellung der Zuführung durch das Bauelement;
- Figur 3: einen optionalen Teil des Verfahrens zur Herstellung eines Grundbauelements in der ersten Ausführungsform nach dem Auflösen des Füllmaterials, wobei das Bauelement zur Bestimmung der Tragfähigkeit mit einer Kraft belastet wird;
- Figur 4: einen weiteren Teil des erfindungsgemäßen Verfahrens zur Herstellung eines Grundbauelements in der ersten Ausführungsform nach dem Auflösen des Füllmaterials, wobei der durch die Zuführung und die Kammer entstandene Hohlraum mit einem Verpressmittel verfüllt wird;
- Figur 5: eine alternative Ausführung des zweiten Teils des erfindungsgemäßen Verfahrens zur Herstellung eines Grundbauelements nach den Figuren 1 bis 4,
A) während der Herstellung einer Zuführung außerhalb des Bauelements;
B) nach der Herstellung der Zuführung außerhalb des Bauelements;
- Figur 6: einen optionalen Teil des Verfahrens zur Herstellung eines Grundbauelements nach Figur 5;
- Figur 7: einen weiteren Teil des Verfahrens nach Figur 5, nämlich das Einpressen von Verpressmittel in die Kammer;
- Figur 8: einen ersten Teil eines erfindungsgemäßen Verfahrens zur Herstellung eines Grundbauelements in einer zweiten Ausführungsform,
A) nach dem Abteufen einer Einfüllvorrichtung,
B) nach dem Einbringen von Füllmaterial in den Boden,
C) während des Einbringens des Bauelementes auf dem Füllmaterial,
D) nach dem vollständigen Einbringen des Bauelementes auf das Füllmaterial,
- Figur 9: einen zweiten Teil des erfindungsgemäßen Verfahrens zur Herstellung eines Grundbauelements in der zweiten Ausführungsform,
A) während der Herstellung eines Verbindungskanals durch das Bauelement;
B) nach der Herstellung des Verbindungskanals durch das Bauelement;
- Figur 10: einen optionalen Teil des Verfahrens zur Herstellung eines Grundbauelements in der zweiten Ausführungsform nach dem Auflösen des Füllmaterials, wobei das Bauelement zur Bestimmung der Tragfähigkeit mit einer Kraft belastet wird;
- Figur 11: einen weiteren Teil des erfindungsgemäßen Verfahrens zur Herstellung eines Grundbauelements in der zweiten Ausführungsform nach dem Auflösen des Füllmaterials, wobei der durch den Verbindungskanal und die Kammer entstandene Hohlraum mit einem Verpressmittel verfüllt wird;
- Figur 12: einen ersten Teil eines erfindungsgemäßen Verfahrens zur Herstellung eines Grundbauelements in einer dritten Ausführungsform,
A) nach dem Abteufen eines Bohrwerkzeuges,
B) nach dem Entfernen des Bohrwerkzeuges,
C) nach dem Einbringen von Füllmaterial in das Erdreich,
D) während des Einbringens des Bauelementes auf dem Füllmaterial,
E) nach dem vollständigen Einbringen des Bauelementes auf das Füllmaterial,
- Figur 13: einen zweiten Teil des erfindungsgemäßen Verfahrens zur Herstellung eines Grundbauelements in der dritten Ausführungsform,
A) während der Herstellung eines Verbindungskanals durch das Bauelement;
B) nach der Herstellung des Verbindungskanals durch das Bauelement;
- Figur 14: einen optionalen Teil des Verfahrens zur Herstellung eines Grundbauelements in der dritten Ausführungsform nach dem Auflösen des Füllmaterials, wobei das Bauelement zur Bestimmung der Tragfähigkeit mit einer Kraft belastet wird;
- Figur 15: einen weiteren Teil des erfindungsgemäßen Verfahrens zur Herstellung eines Grundbauelements in der dritten Ausführungsform nach dem Auflösen des Füllmaterials, wobei der durch den Verbindungskanal und die Kammer entstandene Raums mit einem Verpressmittel verfüllt wird; und
- Figur 16: ein aus dem Füllmaterial gebildeten Körper,
A) in einer ersten Ausgestaltung;
B) in einer zweiten Ausgestaltung mit einer Zwischenschicht aus Einlagematerial;
C) in einer dritten Ausgestaltung mit einer Deckschicht aus Einlagematerial;
D) in einer vierten Ausgestaltung aus einem Gemisch aus Einlagematerial und Füllmaterial;
E) in einer fünften Ausgestaltung aus einem Gemisch aus Einlagematerial und Füllmaterial.

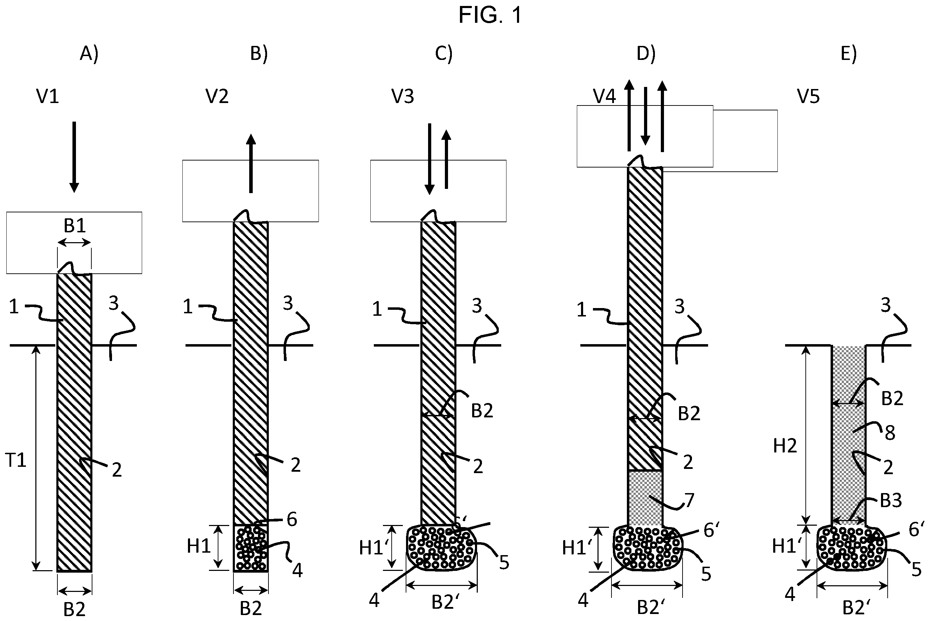

Eine erste Ausführungsform des erfindungsgemäßen Verfahrens wird in den Figuren 1 bis 4, die im Folgenden gemeinsam beschrieben werden, dargestellt. In dem ersten Prozessschritt V1 des erfindungsgemäßen Verfahrens wird mit einem Bodenverdränger 1, beispielsweise einem Tiefenrüttler, ein Gründungsloch 2 in ein Erdreich 3 eingearbeitet. Das Gründungsloch 2 weist dabei eine Solltiefe T1 auf. Die Breite B2 des Gründungslochs 2 entspricht im dargestellten Fall weitgehend der Breite B1 des Bodenverdrängers 1. Es ist auch denkbar, insbesondere falls als Bodenverdränger 1 ein Tiefenrüttler eingesetzt wird, dass die Breite B2 des Gründungslochs 2 größer als die Breite B1 des Bodenverdrängers 1 ist. Der Bodenverdränger kann auch in Form eines Rohres ausgebildet sein.

Nachdem die Solltiefe T1 von dem Bodenverdränger 1 erreicht wurde, wird in einemzweiten Prozessschritt V2 der Bodenverdränger 1 um die Soll-Füllhöhe H1 aus dem Erdreich 3 herausbewegt. Parallel hierzu wird durch eine nicht dargestellte Schleuse am Kopf des Bodenverdrängers 1 ein Füllmaterial 4, wie beispielsweise Steinsalz oder Eiswürfel, in einem festen Zustand in die entstandene Kammer 6 eingebracht. Dies kann entweder alleine durch die Gewichtskraft des Füllmaterials 4 oder aber zusätzlich durch die Unterstützung von Druckluft erfolgen.

Als fester Zustand im Sinne der vorliegenden Erfindung soll jeder feste Aggregatszustand verstanden werden. Das Füllmaterial 4 kann dabei beispielsweise als rolliges Material beziehungsweise Schüttgut mit feiner oder grober Körnung oder in monolithischer Form vorliegen.

In einem optional nachfolgenden Prozessschritt V3 wird das Füllmaterial 4 durch das Auf- und Abbewegen des Bodenverdrängers 1 in das Erdreich 3 gedrückt beziehungsweise gestopft und gegebenenfalls unter der Zufuhr weiteren Füllmaterials 4 verdichtet. Das Füllmaterial 4 bildet am Boden des Gründungsloches 2 einen stabilen Körper, auf dem ein darauf herzustellendes Bauelemente 8 temporär abgestützt beziehungsweise positioniert werden kann. Insofern kann das Füllmaterial 4 in diesem Zustand auch als Stützkörper oder Positionierungselement 5 bezeichnet werden.

Durch das Verdichten kommt es zu einem Aufweiten der Kammer 6 in einer zum Gründungsloch 2 radialen Richtung, sodass eine geweitete Kammer 6' entsteht, die von dem Positionierungselement 5 vollständig ausgefüllt ist. Durch die Aufweitung weist die geweitete Kammer 6' eine Breite B2' auf, die größer ist als die Breite B2 das Gründungslochs 2, und die gleichzeitig die Breite des Positionierungselements 5 darstellt. Die geweitete Kammer 6' beziehungsweise das Positionierungselement 5 weist zudem die Ist-Füllhöhe H1' auf, die je nach Ausgestaltung des Verdichtens ebenfalls von der Soll-Füllhöhe H1 abweichen oder aber mit der Soll-Füllhöhe H1 gleich sein kann.

In dem nachfolgenden Prozessschritt V4 wird der Bodenverdränger 1 angehoben, in den so entstehenden Hohlraum oberhalb des Füllmaterials 4 wird durch die zuvor erwähnte Schleuse am Kopf des Bodenverdrängers 1 das Gründungsmaterial 7, das auch als Baustoff bezeichnet werden kann, des herzustellenden Bauelementes 8, beispielsweise Zement, Beton, Mörtel, Schotter und/oder Kies, in das Gründungsloch 2 auf das Füllmaterial 4 beziehungsweise dem Positionierungselement 5 eingebracht und das Gründungsmaterial 7 durch Auf- und Abbewegen des Bodenverdrängers 1 verdichtet. Wie Prozessschritt V5 zeigt, wird das Vorgehen so lange wiederholt bis das Gründungsloch 2 bis zu einer Sollhöhe H2, in dem vorliegenden Fall bis zur Erdoberfläche, mit dem Gründungsmaterial 7 gefüllt und das Bauelement 8 ausgebildet ist. Dabei kommt es zu einem mantelförmigen Reibkontakt des Gründungsmaterials 7 beziehungsweise des hieraus gebildeten Bauelements 8 mit dem anstehenden Erdreich.

Das Bauelement 8 weist dabei am unteren Ende, dem Fuß, eine Breite B3 auf, die im vorliegenden Fall weitgehend der Breite B2 des Gründungslochs 2 entspricht. Es ist allerdings auch denkbar, dass die Breite B3 auf Grund des Stopfens des Gründungsmaterials größer ist als die ursprüngliche Breite B2 des Gründungslochs 2. Die Breite B3 am Fuß des Bauelementes 8 ist im vorliegenden Fall kleiner als die Breite B2' des Positionierungselements 5 beziehungsweise der hiervon ausgefüllten Kammer 6`. Somit ist sichergestellt, dass das Bauelement 8 an dem unteren Ende vollständig auf dem Füllmaterial 4 aufliegt. Denkbar ist allerdings auch, dass die Breite B3 am Fuß des Bauelementes 8 gleich der Breite B2' des Positionierungselements 5 beziehungsweise der hiervon ausgefüllten Kammer 6' ist.

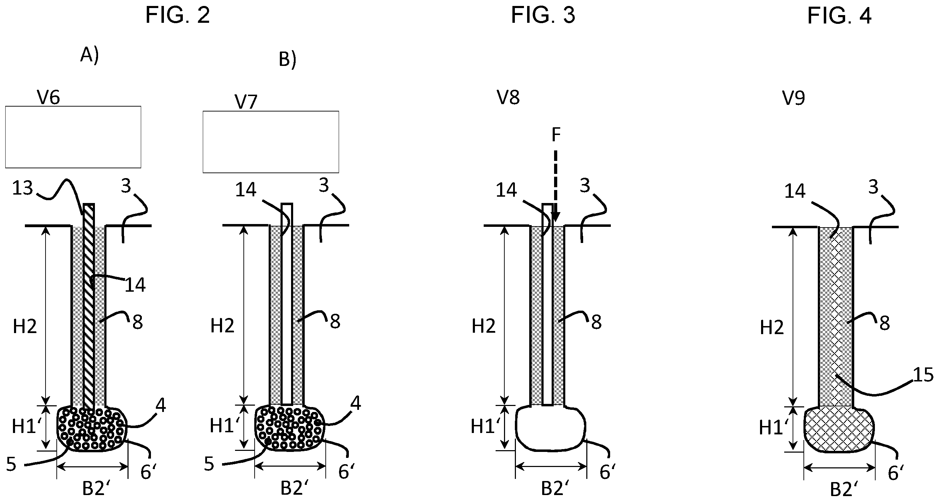

In einem nachfolgenden Prozessschritt V6 wird eine Zuführung 14 in dem Bauelement 8 hergestellt. Die Zuführung 14 ist vorliegend als Verbindungskanal ausgestaltet und weist eine erste in die Umgebung gerichtete Öffnung auf, sodass der Zuführung 14 mit einer Pumpe oder Fülleinrichtung verbindbar ist. Eine zweite Öffnung der Zuführung 14 öffnet sich in Richtung der durch das Positionierungselement 5 gebildeten Kammer 6`. Das Herstellen der Zuführung 14 in das Bauelement 8 kann, wie in Figur 2A dargestellt, mittels eines Bohrers 13 erfolgen. Alternativ kann das Herstellen der Zuführung 14 bei einem Ortbetonpfahl beispielsweise durch Einbringen eines Rohrs oder eines an einem Stab oder einer Armierung geführten Schlauches in das Bauelement 8 erfolgen, insbesondere durch Einbringen, Rammen, Pressen, Schrauben. Dies kann insbesondere vor dem Betonieren oder in einem abbindenden beziehungsweise noch nicht abgebundenem Zustand des Gründungsmaterials 7 des Bauelements 8 erfolgen.

Nach dem Herstellen der Zuführung 4 wird in einem Prozessschritt V7 das hierzu verwendete Werkzeug, im vorliegenden Fall der Bohrer 13, aus dem Bauelement 8 herausgezogen und die Zuführung 14 freigegeben.

Wie in Figur 2 zu erkennen ist, erfolgt die Herstellung der Zuführung 14 im vorliegenden Fall während das Füllmaterial 4 im festen Zustand vorliegt. Wird als Füllmaterial 4 ein wasserlösliches Material verwendet, kann das Herstellen der Zuführung 14 auch nach dem zumindest teilweisen Auflösen des Füllmaterials 4 erfolgen. Im Falle der Wahl eines löslichen Materials als Füllmaterial 4, beispielsweise Steinsalz, oder Eis, wirkt die im Erdreich vorhandene Bodenfeuchte als Lösungsmittel für das Füllmaterial 4.

In einem optionalen, hier nicht dargestellten Prozessschritt, kann über die Zuführung 14 dem Füllmaterial 4 ein Lösungsmittel, das das Füllmaterial 4 auflöst, beigemengt werden. Je nach verwendetem Füllmaterial 4 kann als Lösungsmittel beispielsweise Wasser, Säuren oder Basen verwendet werden. Darüber hinaus ist es auch denkbar, dass das Füllmaterial 4 schon vor dem Einbringen in das Erdreich gemäß Prozessschritt V2 mit dem Lösungsmittel vermengt wird.

Nachfolgend wird in dem Prozessschritt V8 eine Ruhezeit eingehalten, bevor das Bauelement 8 eine signifikante äußere Belastung erfährt. Hiermit ist insbesondere gemeint, dass das Bauelement 8 mit weniger als 10 % seiner Tragfähigkeit belastet wird. In dieser Zeit wird durch den Feuchtegehalt des Erdreiches 3 beziehungsweise durch das Beimengen eingebrachte Lösungsmittel im Bereich der geweiteten Kammer 6' das Füllmaterial 4 beziehungsweise das Positionierungselement 5 nach und nach aufgelöst. Die Ruhezeit wird dabei so gewählt, dass sich an dem Ende der Ruhezeit das Füllmaterial 4 so aufgelöst hat, im vorliegenden Fall vollständig aufgelöst hat, dass durch die Kammer 6' ein Hohlraum unterhalb des Bauelementes 8 gebildet ist. Die Ruhezeit kann zudem so gewählt werden, dass das Gründungsmaterial 7 des Bauelements 8 vollständig aushärten beziehungsweise abbinden kann.

Nach der Ruhezeit kann dann das Bauelement 8 mit einer Kraft F beaufschlagt werden, wobei das Bauelement 8 nur durch die Mantelreibung zwischen der Mantelfläche des Bauelementes 8 und dem Erdreich 3 getragen wird. Ein Spitzendruck kann auf Grund der zumindest teilweise leeren beziehungsweise flüssigkeitsgefüllten Kammer 6' unterhalb des Bauelementes 8 der Kraft F nicht entgegen wirken. Die Kraft F kann beispielsweise für Tragfähigkeitsuntersuchungen des Bauelements, insbesondere der Mantelreibung, mechanisch oder hydraulisch aufgebracht werden.

In einem abschließenden Prozessschritt V9 wird die unter dem Bauelement 8 liegende Kammer 6' und die Zuführung 14 mit einem Verpressmittel 15 verfüllt. Das Verpressen erfolgt erst, wenn das Füllmaterial zumindest teilweise, beispielsweise zu mehr als 20%, insbesondere größtenteils, das heißt zu mehr als 50%, oder vollständig in gelöstem Zustand vorliegt. Zum Verpressen wird die Zuführung 14 mit einer nicht dargestellten Pumpe fluidisch verbunden und das Verpressmittel 15 durch die Zuführung 14 gepumpt. Das Verfüllen mit dem Verpressmittel 15 kann unter Hochdruck mittels der Pumpe erfolgen, sodass das Verpressmittel 15 verpresst wird. Als Verpressmittel 15 kann dabei beispielsweise Beton, Mörtel, Harz, Polyurethan und/oder andere chemische Stoffe, die eine durch Verpressen oder Expansion druckerzeugende Wirkung haben, gewählt werden.

Durch das Einbringen des Verspressmittels 15 wird der Boden unter der Spitze des Bauelements und dadurch auch am Mantel vorgespannt. Dabei wirkt das Bodenelement gegen den hohen Verpressdruck als ein Widerlager. In nicht bindigen Böden mit größerer Porosität kann das Verpressen in mehreren Stufen erfolgen, wobei zunächst die dem Hohlraum umgebenden Poren mit geeignetem Verpressgut ausgefüllt beziehungsweise verdichtet werden.

Alternativ kann das Tiefenrüttelverfahren derart ausgestaltet sein, dass der Verfahrensschritt V3 mit dem Verdichten des Füllmaterials 4 und des Gründungsmaterials 7 entfällt. Hierdurch ergibt sich eine zeiteffiziente Herstellung einfacher Bauelemente. Durch das fehlende Verdichten des Füllmaterials 4 entspricht die Breite B3 am Fuß des Bauelementes 8 der Breite B2 des Füllmaterials 4 beziehungsweise der nach dem Auflösen hierdurch gebildeten Kammer 6. Damit die Belastung von der Gewichtskraft des Bauelementes 8 auf das Füllmaterial 4, insbesondere direkt nach dem Einfüllen des Gründungsmaterials 7 in das Gründungsloch 2, nicht zu einem ungewollten hohen Verdichten des Füllmaterials 4 und einem Absacken des Bauelementes 8 führt, kann die Beschaffenheit des Füllmaterials 4 derart gewählt werden, dass schon mit dem Einfüllen des Füllmaterials 4 eine hohe Schüttdichte des Füllmaterials 4 erreicht wird. Dies kann beispielsweise durch eine feine Körnung und durch hohe Rieselfähigkeit des Füllmaterials 4 erreicht werden.

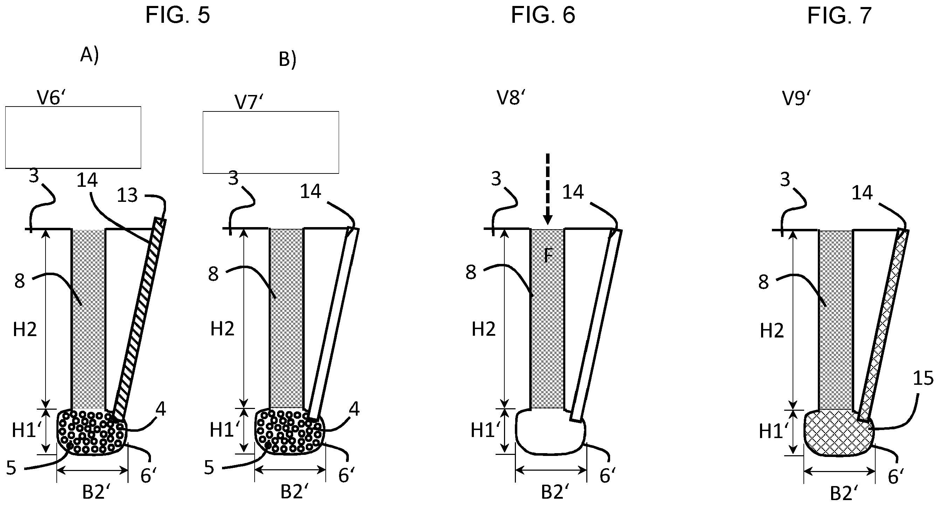

In den Figuren 5 bis 7, die nachfolgend gemeinsam beschrieben werden, ist eine Abwandlung des erfindungsgemäßen Verfahrens nach den Figuren 1 bis 4 dargestellt, wobei die Verfahrensschritte V1 bis V5 identisch sind. In dem alternativen Verfahrensschritt V6' wird der Zuführung 14 nicht durch das Bauelement 8 hindurch geführt, sondern neben dem Bauelement 8 durch das Erdreich 3. Die nachfolgenden Prozessschritte V7', V8' und V9' erfolgen nachfolgend analog zu den zuvor beschriebenen Prozessschritten V7, V8 und V9, sodass an dieser Stelle abkürzend auf die diesbezügliche Beschreibung verwiesen wird. Die in den Figuren 5 bis 7 beschriebene Abwandlung weist den Vorteil auf, dass das Bauelement 8 durch die Herstellung der Zuführung 14 in seiner Struktur nicht verändert wird.

Es versteht sich, dass die Herstellung der Zuführung 14 außerhalb des Bauelements 8 durch das Erdreich 3 auch für die nachfolgend beschriebenen Ausführungsformen des erfindungsgemäßen Verfahrens analog anwendbar ist.

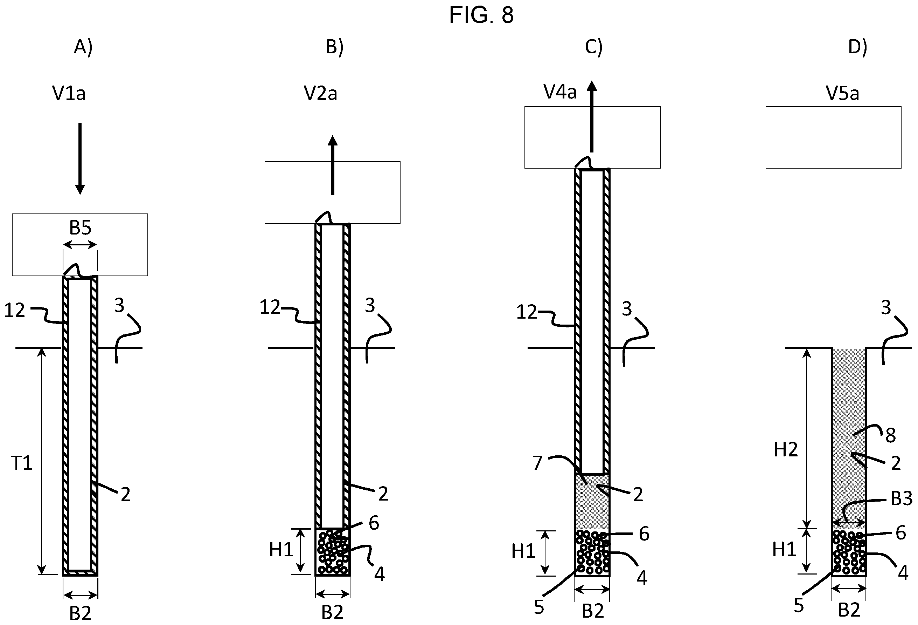

In den Figuren 8 bis 11, die im Folgenden gemeinsam beschrieben werden, ist eine zweite Ausführungsform des erfindungsgemäßen Verfahrens zur Herstellung eines Grundbauelements gezeigt. In einem ersten Prozessschritt V1a wird ein Vortriebsrohr 12 mit einer Breite B5 bis zu einer Solltiefe T1 in das Erdreich 3 eingerammt, eingebohrt, eingedreht oder eingepresst, sodass ein Gründungsloch 2 gebildet wird, dass eine Breite B2 aufweist. In einem nachfolgenden Prozessschritt V2a wird durch die Seele des Vortriebsrohres 12 das Füllmaterial 4 über eine nicht dargestellte Schleuse des Vortriebsrohres 12 in das Gründungsloch 2 eingefüllt und das Vortriebsrohr 12 aus dem Erdreich 3 um einen bestimmten Weg herausgezogen. Nachdem das Füllmaterial 4 bis zu einer Füllhöhe H1 eingebracht wurde, wird in einem weiteren Prozessschritt V4a durch die Seele des Vortriebsrohres 12 das Gründungsmaterial 7 in das Gründungsloch 2 eingefüllt und das Vortriebsrohr 12 aus dem Erdreich 3 weiter herausgezogen. Nach dem Erreichen der Sollhöhe H2 wird in einem weiteren Prozessschritt V5a das Vortriebsrohr 12 aus dem Gründungsloch 2 vollständig entfernt. Aus dem eingebrachten Gründungsmaterial 7 wird somit das Bauelement 8 gebildet, dass eine Breite B3 aufweist, die gleich der Breite B2 des Gründungslochs 2 ist.

In einem nachfolgenden Prozessschritt V6a wird eine Zuführung 14 in dem Bauelement 8 mittels eines Bohrers 13 hergestellt. Das Herstellen der Zuführung 14 in das Bauelement 8 kann analog zu dem Prozessschritt V6 erfolgen.

Nach dem Herstellen der Zuführung 14 wird in einem Prozessschritt V7a das hierzu verwendete Werkzeug, im vorliegenden Fall der Bohrer 13, aus dem Bauelement 8 herausgezogen und der Zuführung 14 freigegeben.

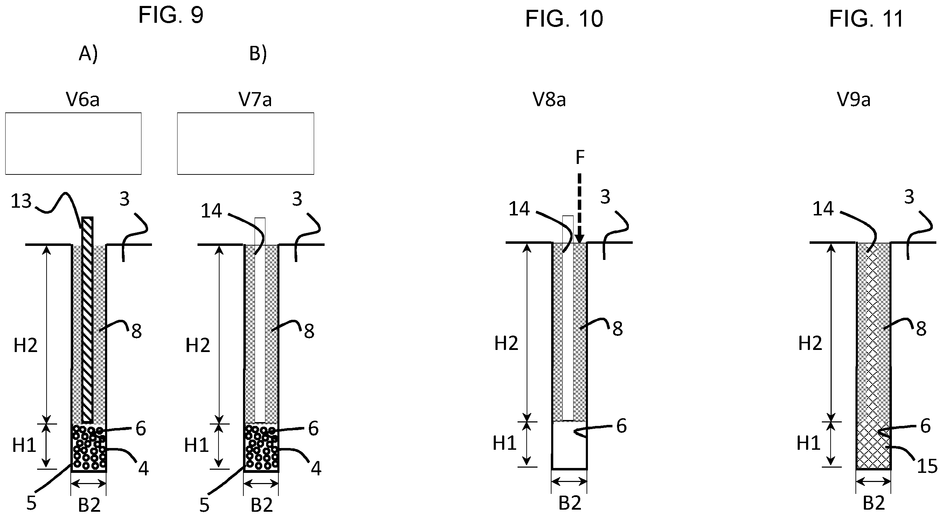

Wie schon in Figur 2, erfolgt auch in Figur 9 die Herstellung der Zuführung 14 noch während das Füllmaterial 4 im festen Zustand vorliegt, wobei die Zuführung auch nach der Verflüssigung des Füllmaterials vorgenommen werden kann.

In einem optionalen, hier nicht dargestellten Prozessschritt, kann über die Zuführung 14 das Füllmaterial 4 mit einem Lösungsmittel, das das Füllmaterial 4 auflöst, geimpft werden. Das heißt, dem Füllmaterial 4 wird ein Lösungsmittel beigemengt. Je nach verwendetem Füllmaterial 4 können als Lösungsmittel beispielsweise Wasser, Säuren oder Basen verwendet werden. Darüber hinaus ist es auch denkbar, dass das Füllmaterial 4 schon vor dem Einbringen in das Erdreich gemäß Prozessschritt V2a mit dem Lösungsmittel geimpft wird.

Nachfolgend wird in dem Prozessschritt V8a analog zu den Prozessschritt V8 eine Ruhezeit eingehalten, bevor das Bauelement 8 eine signifikante äußere Belastung erfährt. Nach der Ruhezeit kann dann das Bauelement 8 mit einer Kraft F beaufschlagt werden, wobei das Bauelement 8 nur durch die Mantelreibung zwischen der Mantelfläche des Bauelementes 8 und dem Erdreich 3 getragen wird. Ein Spitzendruck kann auf Grund der zumindest teilweise leeren Kammer 6 unterhalb des Bauelementes 8 der Kraft F nicht entgegen wirken. Die Kraft F kann beispielsweise für Tragfähigkeitsuntersuchungen des Bauelements, insbesondere der Mantelreibung, mechanisch oder hydraulisch aufgebracht werden.

In einem abschließenden Prozessschritt V9a wird die sich unter dem Bauelement 8 befindende Kammer 6 und die Zuführung 14 analog zu den Prozessschritt V9 mit einem Verpressmittel 15 verfüllt.

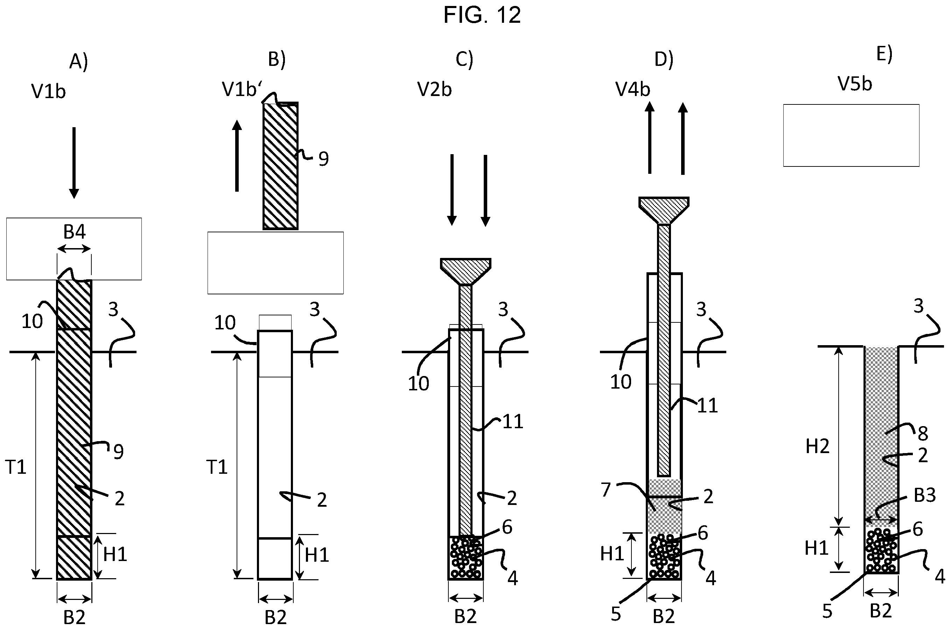

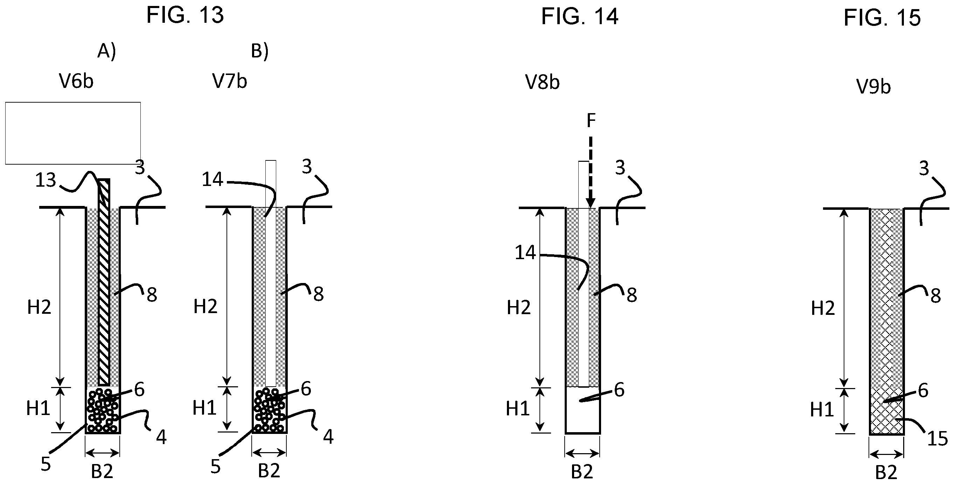

In den Figuren 12 bis 15, die im Folgenden gemeinsam beschrieben werden, ist eine dritte Ausführungsform des erfindungsgemäßen Verfahrens für die Herstellung eines Grundbauelements dargestellt. In dem Verfahrensschritt V1b wird mittels eines Bohrwerkzeuges 9 mit der Breite B4 ein Gründungsloch 2 mit einer Breite B2 in das Erdreich 3 bis zu einer Solltiefe T1 gebohrt. Bei Verwendung eines Bohrverfahrens können die Breite B2 und die Breite B4 identisch sein, das heißt, es kommt zu keiner signifikanten Verdrängung des Erdreiches sondern Material wird aus dem Erdreich herausgefördert. Dies gilt aber nicht für ein sogenanntes Teilverdrängungsbohrverfahren, bei dem es aufgrund des größeren Seelenrohres zu einer bestimmten seitlichen Verdrängung des anstehenden Bodens kommt. Parallel zu dem Bohrvorgang wird ein Stützrohr 10 bis unterhalb einer Soll-Füllhöhe H1 vom Boden des Gründungslochs 2 in das Gründungsloch 2 eingeführt. Das Stützrohr 10 verhindert, dass während des Einbringens des Füllmaterials 4 und des Gründungsmaterials 7 in das Gründungsloch 2 die Mantelfläche des Gründungslochs 2 beschädigt wird, insbesondere Erdreich mit in das Gründungsloch 2 gerissen wird. Es ist auch denkbar, dass auf ein derartiges Stützrohr 10 verzichtet wird. Hierbei kann entweder vollständig auf eine Abstützung des Gründungsloches 2 verzichtet werden oder aber anstelle des Stützrohres 10 eine Stützflüssigkeit in das Gründungsloch 2 eingebracht werden. In einem nachgelagerten Verfahrensschritt V1b' wird das Bohrwerkzeug 9 aus dem Gründungsloch 2 herausgezogen und entfernt. Das Stützrohr 10 verbleibt zunächst in dem Gründungsloch 2.

Nachfolgend wird in dem Verfahrensschritt V2b ein Schüttrohr 11 in das Gründungsloch 2 eingeführt, das am oberen Ende ein Trichterelement aufweist, das in einem Führungsrohr mündet, welches einen kleineren Durchmesser als die Breite B2 das Gründungslochs 2 aufweist. Durch das Schüttrohr 11 wird das Füllmaterial 4 bis zu der Soll-Füllhöhe H1 eingefüllt. Es ist allerdings auch denkbar, dass auf das Schüttrohr 11 verzichtet wird und stattdessen das Füllmaterial 4 direkt von dem oberen Rand des Gründungslochs 2 in das Gründungsloch 2 geschüttet wird. Nachfolgend wird in Verfahrensschritt V4b das Gründungsmaterial 7 oberhalb des Füllmaterials 4 in das Gründungsloch 2 über das Schüttrohr 11 eingebracht, bis die gewünschte Sollhöhe H2 oberhalb des Füllmaterials 4 erreicht wird. Das Stützrohr 10 und das Schüttrohr 11 werden dabei stetig aus dem Gründungsloch 2 herausgezogen. Dies kann entweder parallel oder sequenziell erfolgen, wobei das Stützrohr 10 stets unterhalb einer aktuellen Füllhöhe geführt werden kann. Erfolgt das Einbringen des Gründungsmaterials 7 oberhalb des Grundwasserspiegels, so kann das Schüttrohr 11 stets oberhalb des eingefüllten Gründungsmaterials 7 geführt werden. Erfolgt das Einbringen des Gründungsmaterials 7 unterhalb des Grundwasserspiegels, so kann als Schüttrohr 11 ein Kontraktrohr verwendet werden und so geführt werden, dass der Auslass des Kontraktrohres stets in dem Gründungsmaterial 7 eingetaucht ist. Hiermit wird erreicht, dass es zu keiner Durchmischung des Gründungsmaterials 7 mit dem Grundwasser beziehungsweise Stützflüssigkeit kommt. Es ist allerdings auch denkbar, dass auf ein Schüttrohr 11 verzichtet wird und stattdessen das Gründungsmaterial 7 direkt von dem oberen Rand des Gründungslochs 2 in das Gründungsloch 2 geschüttet wird.

Analog zu der Vorgehensweise der zuvor beiden genannten Ausführungsformen des erfindungsgemäßen Verfahrens werden in den Verfahrensschritten V4b und V5b das Stützrohr 10 und das Schüttrohr 11 aus dem Gründungsloch 2 entfernt, in den Prozessschritten V6b und V7b wird ein Zuführung 14 in dem Bauelement 8 hergestellt, in Prozessschritt V8b wird nach Einhalten der Ruhezeit das Bauelement 8 mit einer Messkraft F beaufschlagt und in Prozessschritt V9b wird der Hohlraum und der Zuführung 14 mit einem Verpressmittel 15 verfüllt beziehungsweise verpresst.

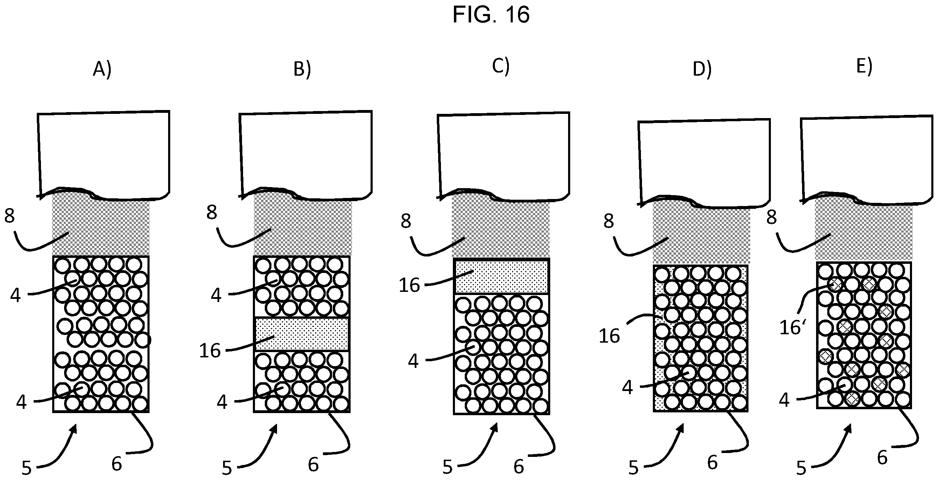

In Figur 16 sind insgesamt fünf verschiedene Ausgestaltungen des durch das Füllmaterial 4 in festem Zustand gebildeten Positionierungselements 5 dargestellt, die jeweils in den oben genannten Ausführungsform des Verfahrens angewendet werden können. In Figur 16A wird das Positionierungselement 5 alleine durch das Füllmaterial 4 gebildet. Das Füllmaterial 4 kann dabei grobkörnig oder feinkörnig gewählt werden. In Figur 16B umfasst das Positionierungselements 5 mittig zwischen einer oberen Schicht und einer unteren Schicht aus Füllmaterial 4 eine Schicht eines Einlagematerials 16, beispielsweise ein Lockersediment, wie Sand oder Kies. Die Schicht Einlagematerial 16 kann dabei im verdichteten oder im unverdichteten Zustand vorliegen. Durch das Einlagematerial 16 kann das Lösungsmittel, insbesondere die Bodenfeuchte, beziehungsweise ein Verflüssigungsbeschleuniger in vorteilhafter Weise zu dem Füllmaterial 4 transportiert werden, sodass das Füllmaterial 4 schnell verflüssigt wird. In Figur 16C umfasst das Positionierungselement 5 eine obere Schicht aus Einlagematerial 16, die zwischen dem Füllmaterial 4 und dem Bauelement 8 angeordnet ist. Auch hier kann die Schicht Einlagematerial 16 im verdichteten oder im unverdichteten Zustand vorliegen. In den Positionierungselementen 5 der Figuren 16B und 16C werden das Füllmaterial 4 und das Einlagematerial 16 sequenziell in die Kammer 6 gefüllt und gegebenenfalls verdichtet.

In der Ausgestaltung des Positionierungselements nach Figur 16 D wird hingegen ein Gemisch aus Füllmaterial 4 und Einlagematerial 16 in die Kammer 6 gefördert, um das Positionierungselement 5 herzustellen. Hierbei weist das Einlagematerial 16 in vorteilhafter Weise eine geringere Körnung als das Füllmaterial 4 auf. Das Gemisch aus Füllmaterial 4 und Einlagematerials 16 kann vor dem Einbringen des Bauelementes 8 verdichtet werden.

Bei den Ausgestaltungen des Positionierungselements 5 nach den Figuren 16 B bis D fällt das Einlagematerial 16 nach dem Auflösen des Füllmaterials 4 zu Boden und verbleibt dort oder löst sich ebenso auf.

In Figur 16E umfasst das Positionierungselement 5 Füllmaterial 4 und rolliges Einlagematerial 16' mit grober Körnung. Nach dem Auflösen des Füllmaterial 4 fällt das Einlagematerial 16' auf den Boden der Kammer 6 oder löst sich ebenso auf. Das Einlagematerial 16' kann nachfolgend in das an die Kammer 6 angrenzende Erdreich vorverpresst werden, bevor die Kammer 6 mit dem Verpressmittel 15 verfüllt wird, wobei eine Verfahrensführung ohne Vorverpressen ebenso möglich ist.

Es versteht sich, dass die in Figur 16 dargestellten Ausgestaltungen des Positionierungselements 5 beliebig miteinander kombiniert werden können. Die einzelnen Schichten des Positionierungselementes 5 können jeweils im verdichteten oder im und verdichteten Zustand vorliegen.

### Bezugszeichenliste

- 1: Bodenverdränger
- 2: Gründungsloch
- 3: Erdreich
- 4: Füllmaterial
- 5: Positionierungselement
- 6, 6': Kammer
- 7: Gründungsmaterial
- 8: Bauelement
- 9: Bohrwerkzeug
- 10: Stützrohr
- 11: Schüttrohr
- 12: Vortriebsrohr
- 13: Bohrer
- 14: Zuführung
- 15: Verpressmittel
- 16, 16': Einlagematerial

- B: Breite
- H: Höhe
- T: Tiefe

## Patentansprüche

1. Verfahren zur Herstellung eines Grundbauelementes, umfassend:
Einbringen eines Füllmaterials (4) in ein Erdreich (3), wobei das Füllmaterial (4) aus einem festen Zustand, in dem es in das Erdreich (3) eingebracht wird, in einen gelösten Zustand überführbar ist;
Einbringen eines Bauelementes (8) in das Erdreich (3) auf das Füllmaterial (4), wenn dies im festen Zustand ist, wobei das Füllmaterial (4) unterhalb des Bauelements (8) eine Kammer (6, 6') ausfüllt;
Herstellen einer Zuführung (14) zu der unterhalb des Bauelements (8) liegenden Kammer (6, 6'); und
Einbringen eines Verpressmittels (15) durch die Zuführung (14) in die unterhalb des Bauelements (8) liegende Kammer, nachdem das Füllmaterial zumindest teilweise in gelösten Zustand überführt ist.

2. Verfahren nach Anspruch 1,
**dadurch gekennzeichnet,**
**dass** zwischen dem Einbringen des Bauelements (8) und dem Einpressen des Verpressmittels (15) eine Verflüssigungszeit eingehalten wird, sodass das Füllmaterial (4) zumindest teilweise in den flüssigen Zustand überführt wird.

3. Verfahren nach einem der Ansprüche 1 oder 2,
**dadurch gekennzeichnet,**
**dass** das Bauelement (8) in Form einer Rüttelsäule durch Einrütteln eines Zugabematerials mittels eines Rüttelverfahrens oder in Form eines Verdrängungspfahls hergestellt wird.

4. Verfahren nach einem der Ansprüche 1 bis 3,
**dadurch gekennzeichnet,**
**dass** als Verpressmittel (15) Mörtel oder ein expandierbarer Kunststoff verwendet wird.

5. Verfahren nach einem der Ansprüche 1 bis 4,
**dadurch gekennzeichnet,**
**dass** die Zuführung (14) im oder am Bauelement (8) vorgesehen wird.

6. Verfahren nach Anspruch 5,
**dadurch gekennzeichnet,**
**dass** das Herstellen der Zuführung (14) durch Bohren durch das Bauelement (8) erfolgt.

7. Verfahren nach Anspruch 5,
**dadurch gekennzeichnet,**
**dass** das Herstellen der Zuführung (14) durch Einbringen eines Rohrs oder eines an einer Armierung befestigten Schlauches erfolgt.

8. Verfahren nach einem der Ansprüche 1 bis 7,
**dadurch gekennzeichnet,**
**dass** das Füllmaterial (4) vor dem Einbringen des Bauelements (8) verdichtet wird.

9. Verfahren nach einem der Ansprüche 1 bis 8,
**gekennzeichnet durch**
Beimengen eines Verflüssigungsbeschleunigers zu dem Füllmaterial, vor oder nach dem Einbringen des Füllmaterials (4) in das Erdreich, wobei das Beimengen des Verflüssigungsbeschleunigers insbesondere über die Zuführung (14) erfolgt.

10. Verfahren nach einem der Ansprüche 1 bis 9,
**dadurch gekennzeichnet,**
**dass** zusätzlich zum Füllmaterial (4) ein Einlagematerial, insbesondere ein Lockersediment, in das Erdreich eingebracht wird, welches nach dem Einbringen des Bauelements (8) die darunterliegende Kammer gemeinsam mit dem Füllmaterial (4) ausfüllt.

11. Verfahren nach Anspruch 10,
**dadurch gekennzeichnet,**
**dass** das Einbringen des Einlagenmaterials auf das Füllmaterial (4) nach dem Einbringen des Füllmaterials (4) in das Erdreich und vor dem Einbringen des Bauelements (8) erfolgt.

12. Verfahren nach einem der Ansprüche 1 bis 11,
**dadurch gekennzeichnet,**
**dass** das Einpressen des Verpressmittels (15) in zumindest zwei Teilschritten erfolgt, wobei zuerst ein erstes Verpressmittel mit einer ersten Viskosität und anschließend ein zweites Verpressmittel mit einer geringeren zweiten Viskosität in die unterhalb des Bauelements (8) liegende Kammer eingepresst wird.

13. Verfahren nach einem der Ansprüche 1 bis 12,
**dadurch gekennzeichnet,**
**dass** das Einbringen des Füllmaterials (4) in das Erdreich und/oder das Einbringen des Bauelements (8) auf dem Füllmaterial (4) durch ein Tiefen- oder Aufsatzrüttelverfahren, durch ein Vortreibrohrverfahren oder durch ein Bohrverfahren erfolgt.

14. Verfahren nach einem der Ansprüche 1 bis 13,
**dadurch gekennzeichnet,**
**dass** zum Einbringen des Füllmaterials (4) in das Erdreich ein Gründungsloch in das Erdreich eingearbeitet wird und,
**dass** das Füllmaterial von einem Boden des Gründungsloches bis zu einer Sollfüllhöhe eingefüllt wird, die mindestens das 0,1-fache des Durchmessers und/oder maximal das 1,0-fache des Durchmessers des Bauelements (8) entspricht.

## Claims

1. Method of making a base member comprising:
introducing a filling material (4) into a soil (3), wherein the filling material (4) convertible from a solid state, in which it is introduced into the soil (3), into a dissolved state;
placing a building element (8) in the soil (3) on top of the filling material (4) when the latter is in the solid state, the filling material (4) filling a chamber (6, 6') below the building element (8);
making a feed (14) to the chamber (6, 6') located below the building element (8); and
introducing a grouting agent (15) through the feed (14) into the chamber located below the building element (8) after the filling material has been at least partially converted into the dissolved state.

2. Method according to claim 1,
**characterised in that**
a liquefaction time is observed between the placing of the building element (8) and the injection of the grouting agent (15), so that the filling material (4) is at least partially converted into the liquid state.

3. Method according to one of claims 1 or 2,
**characterised in that**
the building element (8) is made in the form of a vibration column by vibrating in an addition material by means of a vibration process or in the form of a displacement column.

4. Method according to any one of claims 1 to 3,
**characterised in that**
mortar or an expandable plastic is used as the grouting agent (15).

5. A method according to any one of claims 1 to 4,
**characterised in that**
the feed (14) is provided in or on the building element (8).

6. Method according to claim 5,
**characterised in that**
the feed (14) is made by drilling through the building element (8).

7. Method according to claim 5,
**characterised in that**
the feed (14) is made by inserting a tube or a hose attached to a reinforcement.

8. A method according to any one of claims 1 to 7,
**characterised in that**
the filling material (4) is compacted before the building element (8) is inserted.

9. A method according to any one of claims 1 to 8,
**characterised by**
adding a liquefaction accelerator to the filling material before or after the filling material (4) is introduced into the soil, the liquefaction accelerator being added in particular via the feed (14).

10. A method according to any one of claims 1 to 9,
**characterised in that**
in addition to the filling material (4), an insert material, in particular a loose sediment, is introduced into the soil, which, after the placing of the building element (8), fills the underlying chamber together with the filling material (4).

11. The method according to claim 10,
**characterised in that**
the introduction of the insert material onto the filling material (4) takes place after introducing the filling material (4) into the soil and before placing the building element (8).

12. A method according to any one of claims 1 to 11,
**characterised in that**
the injection of the grouting agent (15) takes place in at least two partial steps, wherein first a first grouting agent with a first viscosity and then a second grouting agent with a lower second viscosity is injected into the chamber located below the building element (8).

13. A method according to any one of claims 1 to 12,
**characterised in that**
introducing the filling material (4) into the soil and/or placing the building element (8) on the filling material (4) is carried out by a deep or top vibration process, by a bore tube process or by a drilling method.

14. A method according to any one of claims 1 to 13,
**characterised in that**
a foundation hole is made in the soil to introduce the filling material (4) into the soil, and,
that the filling material is filled from a bottom of the foundation hole up to a target filling height which corresponds to at least 0.1 times the diameter and/or at most 1.0 times the diameter of the building element (8).

## Revendications

1. Procédé de fabrication d'un composant de base, comprenant :
la mise en place d'un matériau de remplissage (4) dans un sol (3), sachant que le matériau de remplissage (4) peut être transféré d'un état solide, dans lequel il est mis en place dans le sol (3), à un état dissous,
la mise en place d'un composant (8) dans le sol (3) sur le matériau de remplissage (4), lorsque celui-ci est à l'état solide, sachant que le matériau de remplissage (4) remplit une chambre (6, 6') en dessous du composant (8),
la réalisation d'un conduit d'acheminement (14) à la chambre (6, 6') située en dessous du composant (8), et
la mise en place d'un agent d'injection (15) par le conduit d'acheminement (14) dans la chambre située en dessous du composant (8), après que le matériau de remplissage ait été transféré au moins en partie à l'état dissous.

2. Procédé selon la revendication 1,
**caractérisé en ce qu'**
un temps de liquéfaction est observé entre la mise en place du composant (8) et l'injection de l'agent d'injection (15) de telle manière que le matériau de remplissage (4) est transféré au moins en partie à l'état liquide.

3. Procédé selon l'une quelconque des revendications 1 ou 2,
**caractérisé en ce que**
le composant (8) est fabriqué sous la forme d'une colonne vibrante par vibration d'incorporation d'un matériau d'addition au moyen d'un procédé de vibration ou sous la forme d'un pieu à compression.

4. Procédé selon l'une quelconque des revendications 1 à 3,
**caractérisé en ce qu'**
un mortier ou une matière plastique expansible est utilisé en tant qu'agent d'injection (15).

5. Procédé selon l'une quelconque des revendications 1 à 4,
**caractérisé en ce que**
le conduit d'acheminement (14) est prévu dans ou sur le composant (8).

6. Procédé selon la revendication 5,
**caractérisé en ce que**
la réalisation du conduit d'acheminement (14) a lieu par forage à travers le composant (8).

7. Procédé selon la revendication 5,
**caractérisé en ce que**
la réalisation du conduit d'acheminement (14) a lieu par la mise en place d'un tube ou d'un flexible fixé à une armature.

8. Procédé selon l'une quelconque des revendications 1 à 7,
**caractérisé en ce que**
le matériau de remplissage (4) est compacté avant la mise en place du composant (8).

9. Procédé selon l'une quelconque des revendications 1 à 8,
**caractérisé par**
le mélange par addition d'un accélérateur de liquéfaction au matériau de remplissage avant ou après la mise en place du matériau de remplissage (4) dans le sol, sachant que le mélange par addition de l'accélérateur de liquéfaction a lieu en particulier par le biais du conduit d'acheminement (14).

10. Procédé selon l'une quelconque des revendications 1 à 9,
**caractérisé en ce qu'**
un matériau de remplissage (4), en particulier un sédiment meuble, est mis en place dans le sol, lequel remplit en commun avec le matériau de remplissage (4) la chambre se situant en dessous après la mise en place du composant (8).

11. Procédé selon la revendication 10,
**caractérisé en ce que**
la mise en place du matériau de garniture sur le matériau de remplissage (4) a lieu après la mise en place du matériau de remplissage (4) dans le sol et avant la mise en place du composant (8).

12. Procédé selon l'une quelconque des revendications 1 à 11,
**caractérisé en ce que**
l'injection de l'agent d'injection (15) a lieu en au moins deux étapes partielles, sachant que d'abord un premier agent d'injection avec une première viscosité et ensuite un deuxième agent d'injection avec une deuxième viscosité plus faible sont injectés dans la chambre située en dessous du composant (8).

13. Procédé selon l'une quelconque des revendications 1 à 12,
**caractérisé en ce que**
la mise en place du matériau de remplissage (4) dans le sol et/ou la mise en place du composant (8) sur le matériau de remplissage (4) a lieu par un procédé de vibration en profondeur ou de vibration en surface, par un procédé à tube d'enfoncement ou par un procédé de forage.

14. Procédé selon l'une quelconque des revendications 1 à 13,
**caractérisé en ce qu'**
un trou de fondation est aménagé dans le sol pour la mise en place du matériau de remplissage (4) dans le sol et
**en ce que** le matériau de remplissage est versé depuis un fond du trou de fondation jusqu'à une hauteur de remplissage théorique, qui correspond au moins à 0,1 fois le diamètre et/ou au maximum à 1,0 fois le diamètre du composant (8).
